# EUROPEAN PATENT APPLICATION

(11) **EP 4 578 968 A1**
(43) Date of publication of application: **02.07.2025**
(21) Application number: 24860292.2
(22) Date of filing: 21.08.2024
(51) Int. Cl.: C22B 26/12, C22B 3/04, C22B 3/22, C22B 3/44, H01M 10/54

(54) **METHOD FOR RECOVERING LITHIUM**

(30) Priority: 30.08.2023 KR 20230114299; 09.08.2024 KR 20240106755
(71) Applicant: LG Energy Solution, Ltd., Seoul 07335 (KR)
(72) Inventor: KIM, Donghyeon, Daejeon 34122 (KR); KWON, Ohsung, Daejeon 34122 (KR); YU, Hyemin, Daejeon 34122 (KR); LEE, Jeongbae, Daejeon 34122 (KR)
(74) Representative: Hoffmann Eitle
(86) International application number: PCT/KR2024/012415
(87) International publication number: WO 2025/048371

(57) **Abstract**

The present invention relates to a method of recovering lithium, and more particularly, to a method of recovering lithium including step (a) of dissolving cathode material powder having an olivine structure obtained from a cathode of a waste lithium-ion battery in an aqueous acetic acid solution to prepare a solution; step (b) of adding an aqueous hydrogen peroxide (H₂O₂) solution into the solution to obtain lithium-dissolved leachate and a leaching residue; step (c) of separating the leachate and the leaching residue; and step (d) of concentrating the leachate, wherein step (b) is performed at 45 to 65 °C; in step (a), acetic acid is used at a centration of 0.8 to 1.2 mol based on 1 mol of a cathode active material in the cathode material powder; and in step (b), hydrogen peroxide is used at a centration of 0.4 to 0.6 mol based on 1 mol of a cathode active material in the cathode material powder.

According to the method of the present invention, by selectively leaching only lithium from a cathode material having an olivine structure using an oxidizer in a weakly acidic aqueous acetic acid solution within a predetermined temperature range, lithium may be recovered in a high yield. In addition, by preserving FePO₄ as a leaching residue and reusing FePO₄ as a raw material for lithium iron phosphate, productivity and economic efficiency may be greatly improved, and wastewater treatment is unnecessary. Accordingly, eco-friendliness may be achieved.

## Description

### [Technical Field]

### [Cross-Reference to Related Applications]

This application claims priority to Korean Patent Application No. 10-2023-0114299, filed on August 30, 2023, and Korean Patent Application No. 10-2024-0106755, re-filed on August 9, 2024, based on the priority of the above patent, in the Korean Intellectual Property Office, the disclosures of each of which are incorporated herein by reference.

The present invention relates to a method of recovering lithium, and more particularly, to an environmentally friendly lithium recovery method. According to the method of the present invention, by dissolving a cathode material having an olivine structure in a weakly acidic aqueous acetic acid solution, adding an aqueous hydrogen peroxide solution thereto, and then selectively leaching lithium within a predetermined temperature range, lithium may be recovered in a high yield. In addition, by preserving FePO₄ as a leaching residue and reusing FePO₄ as a raw material for lithium iron phosphate, productivity and economic efficiency may be greatly improved, and a wastewater treatment process may be omitted.

### [Background Art]

Demand for lithium-ion batteries has been steadily increasing along with the portable electronic device market since the 1990s, and has recently been increasing further worldwide due to the rapid expansion of the electric vehicle market. This trend could lead to instability in the supply and demand of lithium resources in the near future, and the continuous accumulation of waste batteries could cause major environmental problems. To solve these problems, recycling of used lithium-ion batteries is a very important technological challenge.

A lithium-ion battery is largely composed of a cathode formed by coating a metal foil such as aluminum with a cathode active material layer, an anode formed by coating a metal foil such as copper with an anode active material layer, a separator that prevents the cathode and anode from mixing, and an electrolyte solution that allows lithium ions to move between the cathode and anode.

A cathode accounts for more than 60 % of the cost of a lithium-ion battery. Lithium cobalt oxide (LiCoO₂) is used as the cathode because the lithium cobalt oxide has excellent reversibility, low self-discharge rate, high capacity, and high energy density, and is easy to synthesize. In addition, to reduce the use of expensive cobalt, lithium complex oxides containing Ni, Mn, and the like, such as lithium nickel cobalt manganese oxide (LiNiMnCoO₂), lithium manganese oxide (LiMnO₂), and lithium iron phosphate (LiFePO₄), are used. Since the cathode material contains about 5 to 7 % lithium, a method of recovering lithium from cathode materials of waste lithium-ion batteries is receiving significant attention.

However, lithium iron phosphate (LiFePO₄) has a very stable hexahedral crystal structure, and a wet method is used to break down this stable structure and recover valuable metals by using a high concentration of strong acid or strong base to obtain Li, Fe, and P as respective compounds. At this time, a large amount of toxic wastewater is generated, which causes environmental problems and increases production costs due to the cost of treating the wastewater.

Therefore, there is a need to develop an environmentally friendly lithium recovery method that can recover lithium with high yield from cathode materials with a very stable crystal structure obtained from the cathodes of waste lithium-ion batteries, while reducing production costs.

### [Related Art Documents]

### [Patent Documents]

(Patent Document 1) KR 2007-0112278 A

### [Disclosure]

### [Technical Problem]

Therefore, the present invention has been made in view of the above problems, and it is one object of the present invention to provide a method of recovering lithium from a cathode material of a waste lithium-ion battery. According to the method of the present invention, by dissolving cathode material powder having an olivine structure obtained from a cathode of a waste lithium-ion battery in an aqueous acetic acid solution to prepare an solution, and adding an aqueous hydrogen peroxide (H₂O₂) solution to the prepared solution at 45 to 65 °C, lithium may be recovered in a high yield. In addition, by preserving FePO₄ as a leaching residue and reusing FePO₄ as a raw material for lithium iron phosphate oxide, economic efficiency may be greatly improved. In addition, since strong acid and strong base are not used, the method is environmentally friendly. Accordingly, since neutralization and wastewater treatment are unnecessary, process costs may be reduced.

The above and other objects can be accomplished by the present invention described below.

### [Technical Solution]

I) In accordance with one aspect of the present invention, provided is a method of recovering lithium, the method including (a) dissolving cathode material powder having an olivine structure obtained from a cathode of a waste lithium-ion battery in an aqueous acetic acid solution to prepare a solution; (b) adding an aqueous hydrogen peroxide (H₂O₂) solution into the solution to obtain lithium-dissolved leachate and a leaching residue; (c) separating the leachate and the leaching residue; and (d) concentrating the leachate.
II) In accordance with another aspect of the present invention, provided is a method of recovering lithium, the method including (a) dissolving cathode material powder having an olivine structure obtained from a cathode of a waste lithium-ion battery in an aqueous acetic acid solution to prepare a solution; (b) adding an aqueous hydrogen peroxide (H₂O₂) solution into the solution to obtain lithium-dissolved leachate and a leaching residue;
   (c) separating the leachate and the leaching residue; and
   (d) concentrating the leachate, wherein step (b) is performed at 45 to 65 °C; in step (a), acetic acid is used at a centration of 0.8 to 1.2 mol based on 1 mol of a cathode active material in the cathode material powder; and in step (b), hydrogen peroxide is used at a centration of 0.4 to 0.6 mol based on 1 mol of a cathode active material in the cathode material powder.
III) According to I) or II), the cathode material having an olivine structure may preferably include lithium iron phosphate.
IV) According to I) to III), the cathode material having an olivine structure may be preferably a compound represented by Chemical Formula 1 below.

   [Chemical Formula 1] Li₁₊ₐFe_{1-b}M_{b}(PO_{4-c})X_{c}

   In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are -0.5≤a≤0.5, 0≤b≤0.5, and 0≤c≤0.1, respectively.
V) According to I) to IV), the cathode material powder may be obtained preferably by crushing a cathode of a waste lithium-ion battery and separating cathode material powder and a current collector.
VI) According to I) to V), in step (a), a weight ratio of the cathode material powder to the aqueous acetic acid solution may be preferably 1:6 to 1:10.
VII) According to I) to VI), in step (a), acetic acid may be used preferably at a centration of 0.8 to 1.2 mol based on 1 mol of a cathode active material in the cathode material powder.
VIII) According to I) to VII), in step (b), the aqueous hydrogen peroxide solution may be used preferably at a concentration of 0.4 to 0.6 mol based on 1 mol of a cathode active material in the cathode material powder.
IX) According to I) to VIII), in step (a), the aqueous acetic acid solution may have a molar concentration (mol/L) of 0.5 to 1.
X) According to I) to IX), in step (b), the aqueous hydrogen peroxide solution may have a concentration of 25 to 40 % by weight.
XI) According to I) to X), the method of recovering lithium may have a lithium recovery rate of 90 % by weight or more as calculated by Equation 1 below.
   [Equation 1] Lithium recovery rate (wt%) = [Content (g) of lithium contained in leachate / Content (g) of lithium contained in cathode material powder] × 100
XII) According to I) to XI), step (b) may be performed preferably at a pH of 3.5 to 5.5.
XIII) According to I) to XII), step (b) may be performed preferably while stirring.
XIV) According to I) to XIII), in step (c), separation of the leachate and the leaching residue may be performed preferably using vacuum filtration.
XV) According to I) to XIV), the leaching residue may preferably include FePO₄.
XVI) According to I) to XV), in step (d), concentration of the leachate may be performed preferably using reduced pressure evaporation.
XVII) According to I) to XVI), the method of recovering lithium may preferably include vacuum-drying the leaching residue obtained in step (c) to obtaining a compound including FePO₄.
XVIII) According to I) to XVII), lithium iron phosphate may be prepared using the compound including the obtained FePO₄ by including adding lithium, performing calcination, adding carbon, and performing calcination.

### [Advantageous Effects]

According to the present invention, by dissolving a cathode material having an olivine structure, which is a very stable structure, in a weakly acidic aqueous acetic acid solution, adding an aqueous hydrogen peroxide solution thereto, and then selectively leaching lithium within a predetermined temperature range, lithium can be recovered in a high yield. In addition, by preserving FePO₄ as a leaching residue and reusing FePO₄ as a raw material for lithium iron phosphate, productivity and economic efficiency can be greatly improved.

In addition, since no strong acid or base is used for leaching, no wastewater is generated. Accordingly, process costs can be reduced, and eco-friendliness can be achieved.

### [Description of Drawings]

The drawings attached to this specification illustrate embodiments of the present invention and, together with the detailed description given below, serve to further understand the technical idea of the present invention. Therefore, the present invention should not be construed as being limited to the matters described in these drawings.
FIG. 1 shows the results of measuring a leaching residue obtained in Example 1 using X-ray diffraction analysis (XRD), as one embodiment according to the present invention.
FIG. 2 shows the results of X-ray diffraction analysis (XRD) measurement of leaching residues obtained from Comparative Example 1.
FIG. 3 shows the results of X-ray diffraction analysis (XRD) measurement of leaching residues obtained from Comparative Example 2.
FIG. 4 is a flowchart for explaining a method of recovering lithium from waste lithium-ion battery cathode materials, as one embodiment according to the present invention.

### [Best Mode]

The present inventors confirmed that, while studying a method of recovering lithium from a lithium-ion battery cathode material having a very stable olivine structure, when leaching was performed at 45 to 65 °C by adding an aqueous hydrogen peroxide solution having a predetermined concentration into a solution prepared by dissolving a cathode material having an olivine structure in a weakly acidic aqueous acetic acid solution, the lithium recovery rate was increased, and FePO₄ was preserved in leaching residues. At this time, when FePO₄ was reused as a raw material for lithium iron phosphate, economic efficiency was greatly improved. In addition, since no strong acid or base was used, lithium was recovered in an environmentally friendly manner. Based on these results, the present inventors conducted further studies to complete the present invention.

Hereinafter, a method of recovering lithium according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recovering lithium

A method of recovering lithium according to the present invention includes step (a) of dissolving cathode material powder having an olivine structure obtained from a cathode of a waste lithium-ion battery in an aqueous acetic acid solution to prepare a solution; step (b) of adding an aqueous hydrogen peroxide (H₂O₂) solution into the solution to obtain lithium-dissolved leachate and a leaching residue; step (c) of separating the leachate and the leaching residue; and step (d) of concentrating the leachate. In this case, a high lithium recovery rate may achieved, FePO₄ as a leaching residue may be preserved, and FePO₄ may be used as a raw material for lithium iron phosphate, thereby greatly improving economic efficiency. In addition, since no strong acid or base is used, eco-friendliness may be achieved. In addition, since neutralization and wastewater treatment are not required, process costs may be reduced.

In addition, the method of recovering lithium according to the present invention includes step (a) of dissolving cathode material powder having an olivine structure obtained from a cathode of a waste lithium-ion battery in an aqueous acetic acid solution to prepare a solution; step (b) of adding an aqueous hydrogen peroxide (H₂O₂) solution into the solution to obtain lithium-dissolved leachate and a leaching residue; step (c) of separating the leachate and the leaching residue; and step (d) of concentrating the leachate, wherein step (b) is performed at 45 to 65 °C; in step (a), acetic acid is used at a centration of 0.8 to 1.2 mol based on 1 mol of a cathode active material in the cathode material powder; and in step (b), hydrogen peroxide is used at a centration of 0.4 to 0.6 mol based on 1 mol of a cathode active material in the cathode material powder. In this case, a high lithium recovery rate may achieved, FePO₄ as a leaching residue may be preserved, and FePO₄ may be used as a raw material for lithium iron phosphate, thereby greatly improving economic efficiency. In addition, since no strong acid or base is used, eco-friendliness may be achieved. In addition, since neutralization and wastewater treatment are not required, process costs may be reduced.

Hereinafter, each step of the method of recovering lithium is described in detail.

### (a) Dissolving cathode material powder in aqueous acetic acid solution to prepare solution

The method of recovering lithium according to the present invention includes step (a) of dissolving cathode material powder having an olivine structure obtained from a cathode of a waste lithium-ion battery in an aqueous acetic acid solution to prepare a solution. In this case, lithium may be recovered in a high yield without using a strong acid or base, and wastewater treatment is not required. Thus, eco-friendliness may be achieved.

In the present disclosure, the olivine structure is a type of cathode material structure, and refers to a structure in which phosphorus atoms and oxygen atoms are strongly bonded to a hexahedron with a 3D lattice structure. Since the structure may be maintained even when all lithium ions are lost, there is little performance degradation due to charge and discharge and the structure has excellent thermal stability. In addition, the above structure is economical because inexpensive iron is used instead of expensive cobalt metal, but the energy density, electrical conductivity, and lithium-ion diffusion are lower than those of other cathode materials.

The olivine structure may be confirmed by X-ray diffraction analysis (XRD).

The cathode material herein means a material including a cathode active material or is a cathode active material.

For example, the cathode material having an olivine structure may include lithium iron phosphate. In this case, high-temperature stability, lifespan characteristics, and economic efficiency may be excellent.

For example, the cathode material having an olivine structure may be a compound represented by Chemical Formula 1 below. In this case, high-temperature stability, lifespan characteristics, and economic efficiency may be excellent.

[Chemical Formula 1] Li₁₊ₐFe_{1-b}M_{b}(PO_{4-c})X_{c}

In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are -0.5≤a≤0.5, 0≤b≤0.5, and 0≤c≤0.1, respectively.

The lithium iron phosphate may preferably include LiFePO₄ having an olivine structure. In this case, high-temperature stability, lifespan characteristics, and economic efficiency may be excellent.

For example, the cathode material powder may be obtained by crushing a cathode of a waste lithium-ion battery and separating cathode material powder and a current collector. In this case, economic benefits may be achieved because expensive lithium, FePO₄, and the like may be recovered and recycled.

For example, the cathode of the waste lithium-ion battery may be a discarded lithium-ion battery cathode, a defective product generated during a cathode coating process, or cathode scrap discarded after cutting an electrode plate, preferably a discarded lithium-ion battery cathode. In this case, economic benefits may be achieved because expensive lithium, FePO₄, and the like may be recovered and recycled.

For example, the crushing may be cutting or shredding of discarded lithium-ion battery cathodes, and may preferably be performed using dry pulverizing equipment. Specifically, the crushing may be performed using a hand mill, a pin mill, a disc mill, a cutting mill, or a hammer mill.

For example, the crushed cathode may be pulverized using a mixer, a hand mill, a pin mill, a disc mill, a cutting mill, or a hammer mill, preferably using a mixer. In this case, current collector pieces may be chopped into small pieces, and cathode material may be separated from the current collector pieces.

For example, the pulverized cathode material may be obtained as powder through sieve. In this case, leaching may be done more easily.

For example, the aqueous acetic acid solution may be an aqueous acetic acid solution having a molar concentration (mol/L) of 0.5 to 1, preferably 0.6 to 0.9, more preferably 0.7 to 0.9, still more preferably 0.75 to 0.85. Within this range, lithium may be recovered in a high yield without using a strong acid or base, and wastewater treatment is not required. Thus, eco-friendliness may be achieved.

For example, in step (a), a weight ratio of the cathode material powder to the aqueous acetic acid solution may be 1:6 to 1:10, preferably 1:6.5 to 1:9.5, more preferably 1:7 to 1:9, still more preferably 1:7.5 to 1:8.5, still more preferably 1:7.5 to 1:8. Within this range, the cathode material powder may be easily dissolved in the aqueous acetic acid solution.

For example, the aqueous acetic acid solution may have a pH of 2.0 to 3.5, preferably 2.5 to 3.5, more preferably 2.5 to 3.0. Within this range, the cathode material may be easily dissolved, thereby increasing the lithium recovery rate.

In the present disclosure, pH may be measured by a measurement method commonly used in the technical field to which the present invention belongs. Unless otherwise specified, pH may be measured using a general pH measuring device at room temperature. Specifically, Thermo Scientific Orion Star A Series may be used.

In the present disclosure, room temperature may be any point within the range of 20 ± 5 °C.

For example, in step (a), based on 1 mol of a cathode active material in the cathode material powder, acetic acid may be used at a concentration of 0.8 to 1.2 mol, preferably 0.85 to 1.15 mol, more preferably 0.9 to 1.1 mol, still more preferably 0.95 to 1.05 mol. Within this range, the reaction between cathode material powder and acetic acid may proceed smoothly.

In the present disclosure, 1 mol of a cathode active material is based on a cathode active material in cathode material powder including the cathode active material having an olivine structure.

For example, step (a) may be performed at a room temperature to 70 °C, preferably 45 to 70 °C, more preferably 50 to 70 °C, still more preferably 52 to 65 °C, still more preferably 55 to 65 °C, still more preferably 57 to 62 °C. Within this range, the cathode material may be easily dissolved in the aqueous acetic acid solution.

For example, step (a) may be performed while stirring. In this case, dissolution time may be shortened.

For example, the stirring speed may be 300 to 700 rpm, preferably 350 to 650 rpm, more preferably 400 to 600 rpm, still more preferably 450 to 550 rpm. Within this range, the cathode material may be easily dissolved in the aqueous acetic acid solution, and dissolution time may be shortened.

### (b) Obtaining leachate and leaching residue

The method of recovering lithium according to the present invention may include step (b) of adding an aqueous hydrogen peroxide (H₂O₂) solution into the solution to obtain lithium-dissolved leachate and a leaching residue. In this case, since lithium is selectively leached into leachate, a high lithium recovery rate may be achieved. In addition, FePO₄ as a leaching residue may be preserved, and FePO₄ may be used as a raw material for lithium iron phosphate, thereby greatly improving productivity and economic efficiency.

In the present disclosure, leaching refers to the process of dissolving soluble substances to remove solution and separate soluble and insoluble components.

For example, step (b) may be performed at 45 to 65 °C, preferably 50 to 65 °C, more preferably 52 to 65 °C, more preferably 55 to 65 °C, still more preferably 57 to 62 °C. Within this range, lithium recovery rate may be greatly increased, and leaching of Fe and P components may be significantly reduced.

When step (a) is performed at a lower temperature than step (b), after increasing temperature to the temperature of step (b), an aqueous hydrogen peroxide solution may be added. In this case, lithium recovery rate may be increased.

In step (b), the aqueous hydrogen peroxide solution acts as an oxidizer and facilitates the leaching of lithium from a cathode material.

For example, in the aqueous hydrogen peroxide (H₂O₂) solution, the concentration of hydrogen peroxide may be 25 to 40 % by weight, preferably 27 to 35 % by weight, more preferably 27 to 32 % by weight. Within this range, since lithium is selectively leached into leachate, lithium recovery rate may be increased. In addition, FePO₄ as a leaching residue may be preserved, and FePO₄ may be used as a raw material for lithium iron phosphate, thereby greatly improving productivity and economic efficiency.

For example, in step (b), based on 1 mol of a cathode active material in the cathode material powder, the aqueous hydrogen peroxide solution may be used at a concentration of 0.4 to 0.6 mol, preferably 0.4 to 0.55 mol, more preferably 0.45 to 0.55 mol, still more preferably 0.47 to 0.52 mol. Within this range, by selectively leaching lithium, lithium recovery rate may be increased. In addition, FePO₄ may be preserved as a leaching residue and may be reused as a raw material for lithium iron phosphate, thereby greatly improving productivity and economic efficiency.

For example, in step (b), a weight ratio of the cathode material powder to the aqueous hydrogen peroxide solution may be 1:0.3 to 1:0.8, preferably 1:0.3 to 1:0.7, more preferably 1:0.4 to 1:0.6. Within this range, lithium may be selectively leached while maintaining the pH of the solution at 3.5 to 5.5, and recovery rate may be increased.

For example, step (b) may be performed at a pH of 3.5 to 5.5, preferably 4.0 to 5.5, more preferably 4.0 to 5.0. Within this range, since no strong acid or base is used, wastewater treatment is not required. Accordingly, eco-friendliness may be achieved, and production costs may be reduced.

For example, step (b) may be performed while stirring. In this case, leaching time may be reduced.

For example, the stirring speed may be 300 to 700 rpm, preferably 350 to 650 rpm, more preferably 400 to 600 rpm, still more preferably 450 to 550 rpm. Within this range, lithium may be easily leached from the solution.

For example, the stirring time may be 0.5 hours or more, preferably 0.5 to 2 hours, more preferably 0.5 to 1.5 hours, still more preferably 0.7 to 1.3 hours, still more preferably 0.9 to 1.2 hours. Within this range, lithium may be sufficiently leached from the solution, and thus lithium may be recovered at a high yield.

In the present disclosure, a stirring method or stirring device generally used in the technical field to which the present invention belongs may be used in the present invention without particular limitation.

For example, in step (b), the aqueous hydrogen peroxide solution may be fed continuously or batchwise, preferably continuously. Specifically, the aqueous hydrogen peroxide solution may be fed continuously while stirring. In this case, lithium may be selectively and sufficiently leached without changing the pH of the solution. For example, the batchwise feed may be done by feeding the aqueous hydrogen peroxide solution batchwise at the start of stirring or immediately before stirring. In this case, lithium may be selectively leached.

In the present disclosure, "continuous feed" means that components are not fed batchwise. For example, within a range of leaching time, components may be fed for 10 minutes or more or 30 minutes or more in drop-by-drop, little-by-little, step-by-step, or continuous flow.

For example, the reaction mechanism occurring in the dissolution step and the leaching step is as follows Chemical Formula 2.

[Chemical Formula 2] LiFePO₄ + CH₃COOH + 0.5H₂O₂ ---> FePO₄ + Li⁺ + CH₃COO⁻ + H₂O

In Chemical Formula 2, the dissolved state of LiFePO₄ varies depending on the pH of a solution in which LiFePO₄ is dissolved. LiFePO₄ exists in the forms of Li⁺, Fe²⁺, and PO₄³⁻ at pH 2 or lower, in the forms of Li₃PO₄ and Fe³⁺ at pH 6 or higher, and in the forms of Li⁺ and FePO₄ at pH 2 to 6. In the present invention, the pH of the aqueous acetic acid solution that dissolves a cathode material is controlled to 2.0 to 3.5, and the aqueous hydrogen peroxide solution is added thereto as an oxidizer to oxidize Fe²⁺ to Fe³⁺, thereby facilitating leaching of lithium ions. In addition, the aqueous hydrogen peroxide solution is preferably continuously added so that the pH of the solution is within the range of 3.5 to 5.5. In addition, by performing leaching at 45 to 65 °C, lithium leaching may proceed more stably and sufficiently, thereby obtaining lithium with a high yield.

### (c) Separating leachate and leaching residue

The method of recovering lithium according to the present invention may include step (c) of separating the leachate and the leaching residue. In this case, lithium may be recovered in high yield from leachate, and FePO₄ may be preserved from a leaching residue and may be reused as a raw material for lithium iron phosphate, thereby improving productivity and economic efficiency.

For example, in step (c), the separation of the leachate and the leaching residue may be performed using vacuum filtration. In this case, the leachate and the leaching residue may be easily separated using a simple process, reducing process costs and providing the advantage of eco-friendliness.

The vacuum filtration may preferably be vacuum filtration, and specifically vacuum filtration using a filtration flask. In this case, the leachate and the leaching residue may be easily separated.

In the present disclosure, vacuum filtration commonly used in the technical field to which the present invention belongs may be used in the present invention without particular limitation. For example, vacuum filtration may include filtration under a partial vacuum or low pressure.

For example, the leaching residue may include FePO₄. In this case, the leaching residue may be reused as a raw material for lithium iron phosphate, so economic benefits and benefits of resource recycling may be obtained.

### (d) Concentrating leachate

The method of recovering lithium according to the present invention may include step (d) of concentrating the leachate. In this case, lithium may be easily recovered.

For example, in step (d), concentration of the leachate may be performed by reduced pressure evaporation, and as a specific example, reduced pressure evaporation of leachate may be performed directly without a separate cooling process. In this case, high-purity lithium may be obtained in a high yield.

For example, the reduced pressure evaporation may be performed at 70 to 90 °C and 5 to 20 mbar, preferably at 75 to 85 °C and 7 to 12 mbar. In this case, lithium may be recovered stably in a high yield within a short period of time.

For example, lithium may be recovered by concentrating the leachate, and the lithium may be recovered as an acetic acid lithium. At this time, the lithium recovery rate may be, for example, 90 % by weight or more, preferably 95 % by weight or more. Within this range, economic efficiency may be maximized.

The rate of lithium recovery from the leachate may be measured by any measurement method commonly used in the art to which the present invention belongs, for example, by ICP analysis. Specifically, 0.2 g of leachate is collected and placed in a conical tub. Then, the exact weight of the leachate is measured. Then, 0.1 ml of 70 % nitric acid is added thereto, 500 µl of 1000 mg/kg internal STD (Sc) is added thereto, and the volume of the mixture is adjusted to 50 ml with ultrapure water. Then, the lithium recovery rate is measured by ICP. At this time, when necessary, the sample concentration may be further diluted with ultrapure water to fall within the standard material calibration curve. In addition, the lithium content contained in the cathode material powder may be measured by ICP analysis in the above-described manner, and the lithium recovery rate may be calculated by Equation 1 below.[Equation 1] Lithium recovery rate (wt%) = [Content (g) of lithium contained in leachate / Content (g) of lithium contained in cathode material powder] × 100

In addition, the method of recovering lithium according to the present invention may include a step of vacuum-drying the leaching residue obtained in step (c) to obtain a compound including FePO₄. In this case, a raw material for lithium iron phosphate may be easily prepared, and thus resource recycling may be realized, and economic benefits may be significant.

For example, the vacuum drying may be performed at 120 to 150 °C, preferably 125 to 140 °C, more preferably 125 to 135 °C. Within this range, a compound including FePO₄ may be obtained within a short time.

In the present disclosure, vacuum drying methods and/or conditions commonly practiced in the technical field to which the present invention belongs may be used in the present invention without particular limitation.

For example, using the obtained FePO₄, lithium iron phosphate may be prepared by including a step of adding lithium, performing calcination (hereinafter referred to as '1st calcination step'), adding carbon, and performing calcination (hereinafter referred to as '2nd calcination step'). In this case, a raw material for lithium iron phosphate may be easily prepared, and thus resource recycling may be realized, and economic benefits may be significant.

For example, after adding lithium, calcination (1st calcination step) may be performed at 600 to 800 °C, preferably 650 to 750 °C. Within this range, lithium may be effectively incorporated into FePO₄.

For example, after adding lithium, calcination (1st calcination step) may be performed for 8 to 12 hours, preferably 9 to 11 hours, more preferably 9.5 to 10.5 hours. Within this range, lithium may be effectively incorporated into FePO₄.

For example, after adding lithium, calcination (1st calcination step) may be performed under an inert atmosphere, preferably under a nitrogen atmosphere. In this case, oxidation may be prevented.

For example, after adding carbon, calcination (2nd calcination step) may be performed at 500 to 700 °C, preferably 550 to 650 °C. Within this range, the surface of LiFePO₄ may be coated with carbon to improve electrical conductivity.

For example, after adding carbon, calcination (2nd calcination step) may be performed for 3 to 6 hours, preferably 4 to 5 hours, more preferably 3.5 to 4.5 hours. Within this range, the electrical conductivity of LiFePO₄ may be improved.

For example, after adding carbon, calcination (2nd calcination step) may be performed under an inert atmosphere, preferably under a nitrogen atmosphere. In this case, oxidation may be prevented.

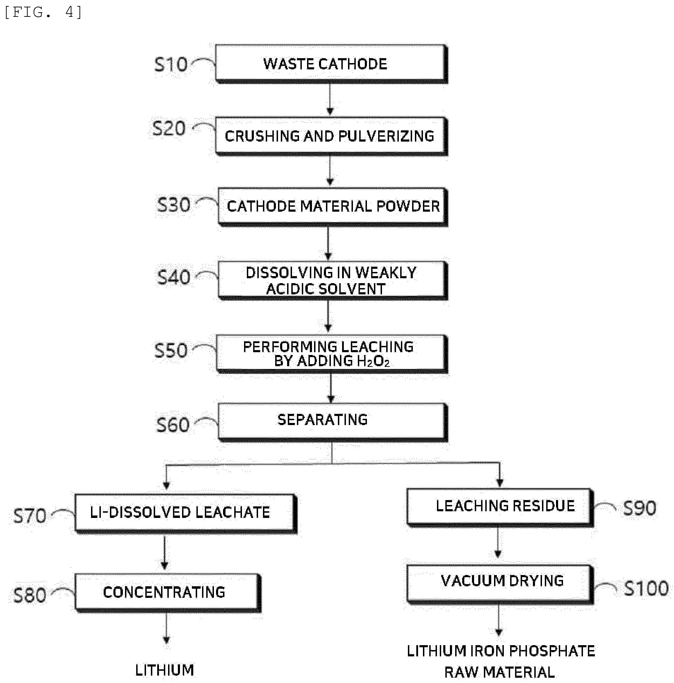

FIG. 4 below is a flowchart for a method of recovering lithium from a lithium-ion battery cathode material, as one embodiment according to the present invention.

Referring to FIG. 4, first, a waste lithium-ion battery cathode is prepared (step S10).

The waste lithium-ion battery cathode may be a discarded lithium-ion battery cathode, a defective product generated during a cathode coating process, or cathode scrap discarded after cutting an electrode plate, preferably a discarded lithium-ion battery cathode.

The cathode has a structure in which a cathode active material layer and a cathode material including a conductive material are combined by a binder on aluminum foil.

Next, the prepared cathode of a waste lithium-ion battery is crushed and pulverized into an appropriate size (step S20).

Here, the crushing involves cutting or shredding the cathode into easy-to-handle sizes. As a specific example, the crushed cathode may have a size of 1 cm × 1 cm. For example, the crushing may be performed using various dry crushing equipment such as a hand mill, a pin mill, a disc mill, a cutting mill, and a hammer mill. In addition, to increase productivity, the crushing may be performed using a high-speed cutter.

Preferably, in consideration of equipment used in handling the cathode and subsequent processes, whether to perform the crushing, the size of pieces, and the like may be determined. For example, when equipment capable of continuous processing is used, since high fluidity is required, the cathode must be crushed into small pieces.

Thereafter, the crushed cathode is pulverized using a mixer, a hand mill, a pin mill, a disc mill, a cutting mill, or a hammer mill. As a specific example, when pulverizing is performed using a mixer, current collector pieces are chopped and cathode material is separated from the current collector pieces.

Next, the pulverized cathode material is sieved to obtain cathode material powder having an olivine structure (step S30).

Through the sieving, powder having a uniform size may be obtained, and current collector pieces may be separated.

Next, the obtained cathode material powder is dissolved in an aqueous acetic acid solution to prepare a solution (step S40).

At this time, the aqueous acetic acid solution may have a molar concentration (mol/L) of preferably 0.5 to 1, as a specific example, 0.8. Within this range, cathode material powder may be easily dissolved. In addition, since no strong acid or base is used, wastewater treatment is unnecessary. Accordingly, eco-friendliness may be achieved, and process costs may be reduced.

The cathode material having an olivine structure may be preferably lithium iron phosphate having an olivine structure, more preferably LiFePO₄ having an olivine structure. In this case, high-temperature stability, lifespan characteristics, and economic efficiency may be excellent.

For example, the weight ratio of the cathode material powder to the aqueous acetic acid solution may be 1:6 to 1:10, as a specific example, 1:7.8. Within this range, the cathode material powder may be easily dissolved in the aqueous acetic acid solution.

For example, the aqueous acetic acid solution may have a pH of 2.0 to 3.5, as a specific example, pH 2.5 to 3.0. Within this range, since wastewater treatment is not required, eco-friendliness may be achieved and process costs may be reduced.

For example, based on 1 mol of a cathode active material in the cathode material powder, the acetic acid may be used at a concentration of 0.8 to 1.2 mol, as a specific example, 1 mol. Within this range, the reaction between cathode material powder and acetic acid may proceed smoothly.

For example, step S40 of preparing the solution may be performed at a room temperature to 70 °C, as a specific example, 60 °C. Within this range, the cathode material powder may be easily dissolved.

Next, an aqueous hydrogen peroxide (H₂O₂) solution is added to the solution to obtain lithium-dissolved leachate and a leaching residue (step S50).

For example, step S50 of leaching may be performed at 45 to 65 °C, as a specific example, 60 °C. Within this range, by selectively leaching lithium in a high concentration, lithium recovery rate may be increased. In addition, FePO₄ may be preserved as a leaching residue and may be reused as a raw material for lithium iron phosphate, thereby greatly improving productivity and economic efficiency.

For example, the aqueous hydrogen peroxide solution acts as an oxidizer and selectively leaches lithium from the solution.

For example, the aqueous hydrogen peroxide (H₂O₂) solution may have a concentration of 25 to 40 % by weight, as a specific example, 30 % by weight. Within this range, by selectively leaching lithium in a high concentration, lithium recovery rate may be increased. In addition, FePO₄ may be preserved as a leaching residue and may be reused as a raw material for lithium iron phosphate, thereby greatly improving productivity and economic efficiency.

For example, the concentration of hydrogen peroxide in the solution may be 1 to 3.5 % by volume, as a specific example, 1.8 % by volume. Within this range, by selectively leaching lithium in a high concentration, lithium recovery rate may be increased. In addition, FePO₄ may be preserved as a leaching residue and may be reused as a raw material for lithium iron phosphate, thereby greatly improving productivity and economic efficiency.

For example, based on 1 mol of a cathode active material in the cathode material powder, the aqueous hydrogen peroxide solution may be used at a concentration of 0.4 to 0.6 mol, as a specific example, 0.5 mol. Within this range, since lithium is selectively leached into leachate, lithium recovery rate may be increased. In addition, FePO₄ as a leaching residue may be preserved, and FePO₄ may be used as a raw material for lithium iron phosphate, thereby greatly improving productivity and economic efficiency.

For example, in step S50 of leaching, a weight ratio of the cathode material powder to the aqueous hydrogen peroxide solution may be 1:0.3 to 1:0.8, specifically, 1:0.6. Within this range, lithium may be selectively leached sufficiently.

For example, the leaching may be performed at a pH of 3.5 to 5.5, as a specific example, 4 to 5. Within this range, lithium may be selectively leached sufficiently, impurities may be reduced, and economic efficiency may be greatly improved. In addition, since no strong acid or base is used, wastewater treatment is not required. Accordingly, eco-friendliness may be achieved, and production costs may be reduced.

For example, the leaching may be performed while stirring. As a specific example, the leaching may be performed while stirring at 500 rpm. Within this range, lithium may be easily leached from the solution.

Preferably, the leaching may be performed by continuously adding an aqueous hydrogen peroxide solution while stirring. In this case, since the pH of the solution does not change, lithium may be leached sufficiently stably, thereby increasing the recovery rate.

For example, the stirring time may be 0.5 hours or more, as a specific example, 1 hour. Within this range, lithium may be sufficiently leached from the solution, and thus lithium may be recovered at a high yield.

Next, leachate and a leaching residue are separated (step S60).

The separation of the leachate and the leaching residue may be performed preferably using vacuum filtration. In this case, the leachate and the leaching residue may be easily separated using a simple process, reducing process costs and providing the advantage of eco-friendliness.

Through the separation, the lithium-dissolved leachate (step S70) and the leaching residue (step S90) are obtained.

For example, the lithium recovery rate from the leachate may be calculated by Equation 1 below. For example, the lithium recovery rate may be 90 % by weight or more, specifically, 95 % by weight or more. Within this range, economic efficiency may be maximized. Lithium recovery rate (wt%) = [Content (g) of lithium contained in leachate / Content (g) of lithium contained in cathode material powder] × 100

Next, the lithium-dissolved leachate is concentrated (step S80).

For example, the concentration of the leachate may be performed using reduced pressure evaporation. As a specific example, Li-dissolved leachate may be concentrated directly using reduced pressure evaporation without a separate cooling process. In this case, high-purity lithium may be obtained in a high yield.

For example, the reduced pressure evaporation may be performed at 70 to 90 °C and 5 to 20 mbar, as a specific example, at 80 °C and 10 mbar. In this case, high-purity lithium may be stably obtained in a high yield within a short time.

The leachate may be concentrated to obtain lithium. At this time, lithium may be recovered as lithium acetic acid.

As an optional step, the separated leaching residue is vacuum-dried to obtain a compound containing FePO₄ (step S100).

The leaching residue may preferably include FePO₄. In this case, a raw material for lithium iron phosphate may be reused, and thus economic benefits may be increased.

For example, the vacuum drying may be performed at 120 to 150 °C, as a specific example, 130 °C. Within this range, a compound including FePO₄ may be obtained within a short time.

By including a step of first adding lithium to FePO₄, performing calcination (1st calcination step), adding carbon, and performing calcination (2nd calcination step), lithium iron phosphate may be prepared. In this case, economic benefits may be increased by recycling resources.

For example, in the 1st calcination step, lithium may be added to the compound including FePO₄, and calcination may be performed at 800 °C for 8 to 12 hours under an inert atmosphere. Within this range, lithium may be sufficiently incorporated into FePO₄ and be converted into LiFePO₄.

As a specific example, in the 1st calcination step, lithium may be added to the compound including FePO₄, and calcination may be performed at 700 °C for 10 hours under a nitrogen atmosphere. Within this range, lithium may be sufficiently incorporated into FePO₄ and be converted into LiFePO₄.

For example, in the 2nd calcination step, calcination may be performed at 500 to 700 °C for 3 to 6 hours under an inert atmosphere. Within this range, the electrical conductivity of LiFePO₄ may be improved.

As a specific example, in the 2nd calcination step, carbon may be added to the calcinated LiFePO₄, and calcination may be performed at 600 °C for 4 hours under a nitrogen atmosphere. Within this range, the electrical conductivity of LiFePO₄ may be improved.

In the present disclosure, unless otherwise specified, the atmosphere of reaction or calcination may be air, pressure may be atmospheric pressure, and temperature may be room temperature, without particular limitation.

In the present disclosure, room temperature may be any point within the range of 20 ± 5 °C.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

A cathode of a waste lithium-ion battery was crushed and then pulverized using a mixer to separate a current collector. A cathode material from which the current collector had been separated was sieved to obtain cathode material powder (LiFePO₄) having an olivine structure. As a result of performing X-ray diffraction analysis (XRD) on the obtained cathode material powder, it was confirmed that the powder had an olivine structure.

12 g of the obtained cathode material powder (LiFePO₄) having an olivine structure was dissolved in 94 ml of an aqueous acetic acid solution having a molar concentration (mol/L) of 0.8 at 60 °C while stirring to prepare a solution. At this time, the pH of the aqueous acetic acid solution was 2.5 to 3.0, and acetic acid corresponded to 1 mol based on 1 mol of a cathode active material in the cathode material powder. At this time, stirring was performed at 500 rpm.

6 ml of an aqueous H₂O₂ solution having a concentration of 30 % by weight was continuously added to the prepared solution at 60 °C for 1 hour while stirring to obtain Li-dissolved leachate and a leaching residue. At this time, stirring was performed at 500 rpm. At this time, hydrogen peroxide was used at a concentration of 0.5 mol based on 1 mol of the cathode active material in the cathode material powder.

The Li-dissolved leachate and the leaching residue were separated by vacuum filtration, and then the Li-dissolved leachate was concentrated by reduced pressure evaporation without a separate cooling process to recover Li as lithium acetic acid. At this time, the recovery rate was measured using the Li-dissolved leachate.

Using the leaching residue and reduced pressure evaporation, FePO₄ was obtained.

### Comparative Example 1

16.75 g of LiFePO₄ in powder form having an olivine structure obtained from a waste lithium-ion battery and 13.27 g of Na₂S₂O₈ as an oxidizer were added to 100 ml of distilled water, and leaching was performed at 25 °C for 1 hour to obtain leachate and a leaching residue. At this time, leaching was performed while stirring at 500 rpm.

The Li-dissolved leachate and the leaching residue were separated by vacuum filtration, and then the Li-dissolved leachate was subjected to reduced pressure evaporation to obtain Li as lithium sulfate.

### Comparative Example 2

10 g of LiFePO₄ in powder form having an olivine structure obtained from a waste lithium-ion battery and 100 ml of an aqueous H₂O₂ solution having a concentration of 30 % by weight as an oxidizer were added to 400 ml of distilled water, and leaching was performed at 25 °C for 1 hour to obtain leachate and a leaching residue. At this time, leaching was performed while stirring at 500 rpm. At this time, hydrogen peroxide was used at a concentration of 15.5 mol based on 1 mol of a cathode active material in cathode material powder.

The Li-dissolved leachate and the leaching residue were separated by vacuum filtration. The Li-dissolved leachate showed very low lithium leaching, so no concentration step was performed.

### Comparative Example 3

The same procedure as Example 1 was performed, except that the dissolution and leaching were performed at 25 °C.

### Comparative Example 4

The same procedure as Example 1 was performed, except that the dissolution and leaching were performed at 80 °C.

### Comparative Example 5

The same procedure as Example 1 was performed, except that 12 g of LiFePO₄ in powder form having an olivine structure obtained from a waste lithium-ion battery was dissolved in a solution obtained by mixing 94 ml of an aqueous acetic acid solution having a molar concentration of 0.8 and 6 ml of an aqueous H₂O₂ solution having a concentration of 30 % by weight, and leaching was performed at 500 rpm for 1 hour while stirring. At this time, the pH of the solution obtained by mixing the aqueous acetic acid solution and the aqueous hydrogen peroxide solution was 7.

### Comparative Example 6

The same procedure as Example 1 was performed, except that 1.5 ml of an aqueous H₂O₂ solution having a concentration of 30 % by weight was continuously added to the prepared solution at 60 °C for 1 hour while stirring to obtain Li-dissolved leachate and a leaching residue. At this time, based on 1 mol of a cathode active material in cathode material powder, hydrogen peroxide was used at a concentration of 0.2 mol.

### Comparative Example 7

The same procedure as Example 1 was performed, except that 8 ml of an aqueous H₂O₂ solution having a concentration of 30 % by weight was continuously added to the prepared solution at 60 °C for 1 hour while stirring to obtain Li-dissolved leachate and a leaching residue. At this time, based on 1 mol of a cathode active material in cathode material powder, hydrogen peroxide was used at a concentration of 0.8 mol.

### Comparative Example 8

The same procedure as Example 1 was performed, except that 12 g of the obtained cathode material powder (LiFePO₄) having an olivine structure was dissolved in 94 ml of an aqueous acetic acid solution having a molar concentration of 0.49 at 60 °C while stirring to prepare a solution. At this time, based on 1 mol of a cathode active material in cathode material powder, acetic acid corresponded to 0.6 mol.

### Comparative Example 9

The same procedure as Example 1 was performed, except that 12 g of the obtained cathode material powder (LiFePO₄) having an olivine structure was dissolved in 94 ml of an aqueous acetic acid solution having a molar concentration of 1.13 at 60 °C while stirring to prepare a solution. At this time, based on 1 mol of a cathode active material in cathode material powder, acetic acid corresponded to 1.4 mol.

### Comparative Example 10

The same procedure as Example 1 was performed, except that leaching of the prepared solution was performed at 70 °C.

### [Test Example I: Li recovery rate depending on input amounts of acetic acid and hydrogen peroxide]

In Example 1 and Comparative Examples 1, 2, 6, 7, 8, and 9, Li-dissolved leachate was measured through ICP analysis, and the results are shown in Table 1 below.

* Li recovery rate (wt%): 0.2 g of leachate was collected and placed in a conical tub. Then, the exact weight of the leachate was measured. Then, 0.1 ml of 70 % nitric acid was added thereto, 500 µl of 1000 mg/kg internal STD (Sc) was added thereto, and the volume of the mixture was adjusted to 50 ml with ultrapure water. Then, the lithium recovery rate was measured by ICP, and the recovery rate was calculated by Equation 1 below. In addition, the lithium content contained in the cathode material powder was measured by ICP analysis according to the method described above, and the lithium recovery rate was calculated using Equation 1 below. [Equation 1] Lithium recovery rate (wt%) = [Content (g) of lithium contained in leachate / Content (g) of lithium contained in cathode material powder] × 100

**[Table 1]**

| Classification | Li recovery rate (wt%) | Fe recovery rate (wt%) | P recovery rate (wt%) |
|---|---|---|---|
| Example 1 | 95.5 | 0.3 | 1.4 |
| Comparative Example 1 | 75.2 | 0 | 0 |
| Comparative Example 2 | 23.1 | 0.9 | 16.2 |
| Comparative Example 6 | 31 | 0.1 | 0.8 |
| Comparative Example 7 | 74.6 | 0.3 | 1.4 |
| Comparative Example 8 | 44.9 | 0.2 | 1.0 |
| Comparative Example 9 | 75.5 | 0.3 | 1.3 |

As shown in Table 1, compared to Comparative Examples 1, 2, 6, 7, 8, and 9, Example 1 according to the present invention exhibited a very high Li recovery rate. In addition, Example 1 exhibited Fe and P recovery rates similar or equal to those of Comparative Examples 1, 2, 6, 7, 8, and 9. From these results, it was confirmed that lithium was selectively leached in Example 1.

### [Test Example II: XRD analysis]

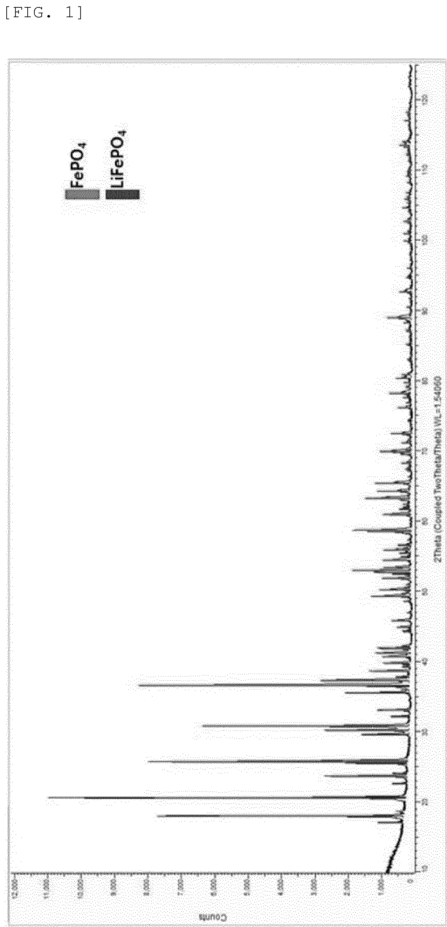

The results of XRD analysis of the leaching residues separated in Example 1 and Comparative Examples 1 and 2 are shown in FIGS. 1 to 3, respectively.
* XRD analysis: 2 g of the sample was placed in an XRD measurement holder, and measurements were performed at an accelerating voltage of 40 kV and 30 mA, 2-theta 10-80°, a step size of 0.02, and a rate of 2 °C/min.

As shown in FIG. 1 below, according to the XRD results of the leaching residue of Example 1 according to the present invention, the FePO₄ peak was observed and the LiFePO₄ peak was not observed. From these results, it was confirmed that FePO₄ was preserved in the leaching residue of Example 1 according to the present invention. In addition, Example 1 showed a distinct FePO₄ peak intensity compared to Comparative Examples 1 and 2.

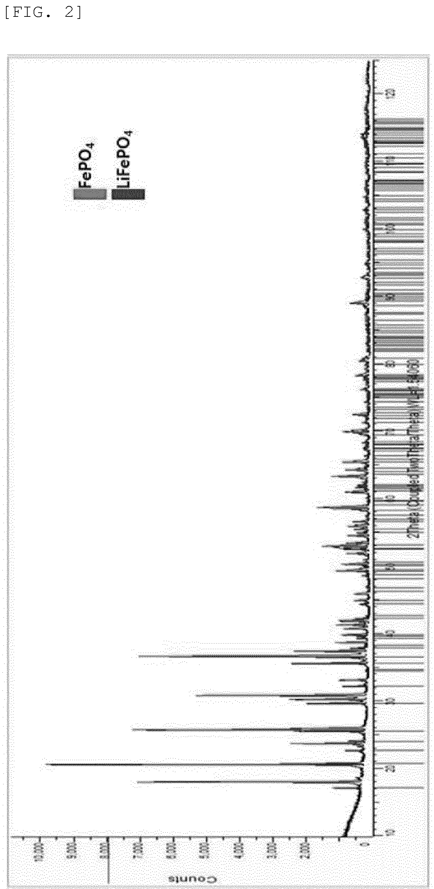

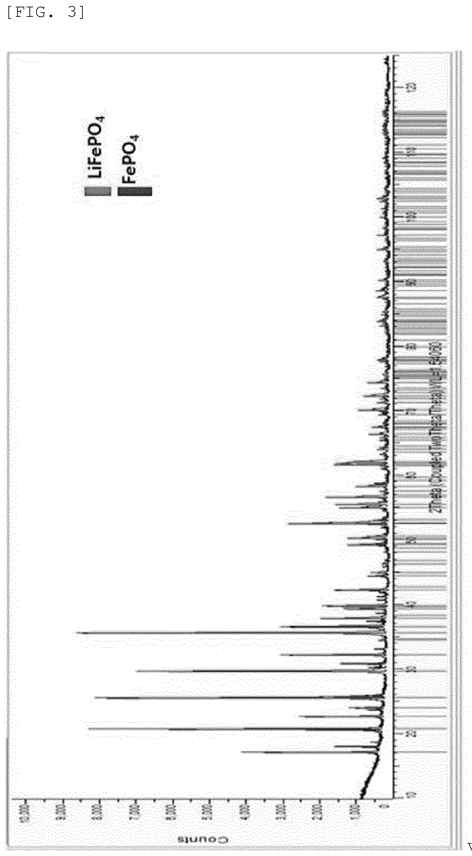

In addition, as shown in FIGS. 2 and 3 below, from the XRD results of the leaching residues of Comparative Examples 1 and 2, in addition to the FePO₄ peak, the LiFePO₄ peak was also observed. From these results, it was confirmed that the leaching residues of Comparative Examples 1 and 2 contained large amounts of Li.

### [Test Example III: Li, Fe, and P recovery rates depending on leaching temperatures]

For the leachates of Example 1 and Comparative Examples 3 and 10, the recovery rates of Li, Fe, and P were measured by ICP analysis, and the results are shown in Table 2 below. Here, the recovery rates of Fe and P were measured through ICP analysis using the same method as the Li recovery rate..

**[Table 2]**

| Classification | Dissolution temperature (°C) | Leaching temperature (°C) | Li recovery rate (wt%) | Fe recovery rate (wt%) | P recovery rate (wt%) |
|---|---|---|---|---|---|
| Example 1 | 60 | 60 | 95.5 | 0.3 | 1.4 |
| Comparative Example 3 | 25 | 25 | 74.4 | 0.2 | 1.2 |
| Comparative Example 4 | 80 | 80 | 75.9 | 0.2 | 1.2 |
| Comparative Example 10 | 70 | 70 | 80.2 | 0.3 | 1.3 |

As shown in Table 2, compared to Comparative Examples 3, 4, and 10, Example 1 according to the present invention exhibited a very high Li recovery rate. In addition, Example 1 exhibited Fe and P recovery rates similar or equal to those of Comparative Examples 3, 4, and 10. From these results, it was confirmed that only lithium was selectively leached from the leachate in Example 1.

### [Test Example IV: Li, Fe, and P recovery rates depending on input order of aqueous hydrogen peroxide solution]

For the leachates of Example 1 and Comparative Example 5, the recovery rates of Li, Fe, and P were measured by ICP analysis, and the results are shown in Table 3 below.

**[Table 3]**

| Classification | Li recovery rate (wt%) | Fe recovery rate (wt%) | P recovery rate (wt%) |
|---|---|---|---|
| Example 1 | 95.5 | 0.3 | 1.4 |
| Comparative Example 5 | 90.8 | 0.8 | 15.3 |

As shown in Table 3, compared to Comparative Example 5, Example 1 according to the present invention exhibited a high Li recovery rate and low Fe and P recovery rates. From these results, it was found that, compared to Comparative Example 5, only lithium was selectively leached in Example 1, while Fe and P components were leached in trace amounts.

## Claims

1. A method of recovering lithium, comprising:
(a) dissolving cathode material powder having an olivine structure obtained from a cathode of a waste lithium-ion battery in an aqueous acetic acid solution to prepare a solution;
(b) adding an aqueous hydrogen peroxide (H₂O₂) solution into the solution to obtain lithium-dissolved leachate and a leaching residue;
(c) separating the leachate and the leaching residue; and
(d) concentrating the leachate,
wherein step (b) is performed at 45 to 65 °C;
in step (a), acetic acid is used at a centration of 0.8 to 1.2 mol based on 1 mol of a cathode active material in the cathode material powder; and
in step (b), hydrogen peroxide is used at a centration of 0.4 to 0.6 mol based on 1 mol of a cathode active material in the cathode material powder.

2. The method according to claim 1, wherein the cathode material having an olivine structure comprises lithium iron phosphate.

3. The method according to claim 1, wherein the cathode material having an olivine structure is a compound represented by Chemical Formula 1 below.
[Chemical Formula 1] Li₁₊ₐFe_{1-b}M_{b}(PO_{4-c})X_{c}
wherein M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, and c are -0.5≤a≤0.5, 0≤b≤0.5, and 0≤c≤0.1, respectively.

4. The method according to claim 1, wherein the cathode material powder is obtained by crushing a cathode of a waste lithium-ion battery and separating cathode material powder and a current collector.

5. The method according to claim 1, wherein, in step (a), a weight ratio of the cathode material powder to the aqueous acetic acid solution is 1:6 to 1:10.

6. The method according to claim 1, wherein, in step (a), the aqueous acetic acid solution has a molar concentration (mol/L) of 0.5 to 1.

7. The method according to claim 1, wherein, in step (b), the aqueous hydrogen peroxide solution has a concentration of 25 to 40 % by weight.

8. The method according to claim 1, wherein the method of recovering lithium has a lithium recovery rate of 90 % by weight or more as calculated by Equation 1 below. Lithium recovery rate (wt%) = [Content (g) of lithium contained in leachate / Content (g) of lithium contained in cathode material powder] × 100

9. The method according to claim 1, wherein step (b) is performed at a pH of 3.5 to 5.5.

10. The method according to claim 1, wherein step (b) is performed while stirring.

11. The method according to claim 1, wherein, in step (c), separation of the leachate and the leaching residue is performed using vacuum filtration.

12. The method according to claim 1, wherein the leaching residue comprises FePO₄.

13. The method according to claim 1, wherein, in step (d), concentration of the leachate is performed using reduced pressure evaporation.

14. The method according to claim 1, comprising vacuum-drying the leaching residue obtained in step (c) to obtain FePO₄.

15. The method according to claim 14, wherein lithium iron phosphate is prepared using the obtained FePO₄ by comprising adding lithium, performing calcination, adding carbon, and performing calcination.
